# EUROPEAN PATENT SPECIFICATION

(11) **EP 2 682 660 B1**
(45) Date of publication and mention of the grant of the patent: **22.04.2015**
(21) Application number: 12174704.2
(22) Date of filing: 03.07.2012
(51) Int. Cl.: F16L 21/00, E04D 13/08, E04F 17/00, F23J 13/04

(54) **Conical fitting for metal sheet pipes**
Konische Fassung für Metallblechleitungen
Raccord conique pour tuyaux de feuille métallique

(43) Date of publication of application: 08.01.2014
(73) Proprietor: BEZA S.p.A., 37057 San Giovanni Lupatoto (VR) (IT)
(72) Inventor: Beghini, Claudio, 37057 San Giovanni Lupatoto (VR) (IT)
(74) Representative: Zardi, Marco

(56) References cited:
- EP-A1- 1 323 971
- EP-A2- 0 798 513
- DE-A1- 19 519 073
- DE-U1- 9 405 905

## Description

### Field of application

The invention concerns a conical fitting for joining pipe elements, particularly suitable for metal sheet pipes like chimney flues, gutters, generic ducts and the like.

### Prior art

Conical joint fitting between pipe elements is known in the field. It essentially consists of a fitting between respectively tapered and enlarged male/female parts with a conical profile. More generally, a conical coupling between pipe elements is also called "Morse cone" after the name of the inventor.

For example in the field of pipes having small thickness, like chimney flues, it is known to make a conical fitting between metal sheet elements, where in substance a conically tapered male part engages a conically enlarged female part, and the two male/female parts have the same angle of conicity.

Such a conical fitting is simple to realize but suffers from some drawbacks. In fact, the joint must keep a tight seal, i.e. avoid leakage of gas or condensate in a liquid state; at the same time the joint must ensure mechanical resistance to extraction (seizure). Moreover, the fitting must not require an excessive force, which could deform the tube and would cause obvious assembly difficulties.

It has been noted that a quite large angle of conicity is preferable for the purpose of the tight seal; a large angle of conicity however makes the assembly harder and increase the risk of deformation of the surfaces; moreover, if the conical section is somewhat long, a relatively large angle of conicity increases the size of the joint due to the enlargement of the female part.

For these reasons, the choice of the angle of conicity up to now has always been the result of a compromise, and as such is not fully satisfactory. In some cases, it has been noted that the tight seal is insufficient and in any case it is necessary to provide a gasket, sealant paste or similar. The use of a gasket or similar does, however, introduce limitations and drawbacks: the gasket or other element can age early, may not be able to withstand too high or too low temperatures, and may be difficult to replace.

EP 1 323 971 discloses a bayonet connection between elements of a duct. A conical pipeline connections is described in DE 195 19 073

### Summary of the invention

The invention proposes to overcome the aforementioned limitations of the prior art, by providing a new conical fitting. The new fitting is particularly suitable for metal sheet pipes, like for example chimney flues, gutters or pipes for the transportation of liquid and gaseous fluids.
Said purpose is accomplished with a pipe element according to claim 1.

The pipe element according to the invention provides a fitting which has, in other words, a double conicity on both the male element and the female element. The male and female elements have a symmetrical conicity, i.e. the conicity of the end portion of the male corresponds to the conicity of the most inner portion of the female end, and at the same time the mouth portion of the female end has the same conicity as the most inner portion of the male.

Indeed, the applicant has found that the seizure effect (mechanical resistance to extraction) is suitably ensured even by a quite small angle of conicity, i.e. less than 1° and for example of the order of 0.25°. Starting from this consideration, the applicant came to the idea of a coupling with a double conicity, wherein a coupling with small conicity provides the seizure, and another coupling with a greater conicity ensures the tight seal to gas and liquids. The first angle of conicity can be called sealing angle, and the second angle can be called seizure or anti-extraction angle.

The great advantage of the invention, in other words, is that there are substantially two conical couplings dedicated respectively to the fluid-tight and mechanical seal Therefore, it is no longer necessary to seek a compromise solution as occurs in the prior art.

For example, it should be noted that the inner part of the coupling with smaller conicity (e.g. 0.25°) makes it possible to have a sufficiently large contact surface and to ensure the required mechanical seal, without on the other hand widening too much the diameter and/or causing excessive difficult of assembly. On the other, hand, it is possible to adopt an advantageously larger angle of conicity (e.g. 1.5°) in the region intended for the tight seal.

The angles of conicity and the length of the respective portions of the male and female end can be determined upon the specific requirements in terms of seal, strength, the diameter of the tube and the conditions of use (temperature, pressure, etc.).

Said first angle of conicity is advantageously comprised between about 1° and 2°, and preferably it is about 1.5°.

Said second angle of conicity is advantageously less than 1°; preferably it is comprised between about 0.2° and 0.5°, and even more preferably it is about 0.25°.

The applicant has found that a fitting according to the invention between tubes made from metal sheet of a small thickness (0.4 - 1.5 mm) is able to ensure the tight seal without a gasket even at a pressure of 5000 Pa, thus being suitable for use in chimney flues or similar. The tight seal, indeed, is provided substantially by the elasticity of the material (metal sheet of small thickness). The possibility of making a seal without a gasket or other non-metallic element is an important advantage because it eliminates a component which is subject to ageing and which sooner or later need replacement.

Another advantage of the invention is that it avoids widening the female tube too much, as occurs in the prior art adopting a single conical part with opening angle for example of 2 degrees. Said advantage is appreciable particularly in pipe elements having a large diameter, in which the length of the tapered part is also considerable. The length of the conical parts (male and female), indeed, is substantially proportional to the diameter; for example the conical part is about 100 mm long for a diameter of 900 mm.

According to a preferred aspect, the male end comprises a depression or throat in the transition area between the first and the second portion with different angles of conicity. This depression substantially prevents parts having different conicity from overlapping, since in this case there would be a risk of deformation that would hinder the seal against pressures and condensate. In other words, it prevents the inner part of the male (with smaller conicity) from working in contact with the inner part of the female, having greater conicity. Said depression or throat preferably has a diameter, at the throat section, that is smaller than the diameter of the adjoining conical portions.

The female end preferably comprises at least one protrusive ribbing, and preferably a double ribbing. The presence of at least one ribbing is useful for stiffening the pipe element, and during the machining step it prevents the expulsion of the piece to be worked from the expanding tool; a double ribbing also defines a housing seat that is useful for per se known locking systems like a flange, a strap, etc.

The conical ends can be obtained for example with the process known as "belling", i.e. with an expansion tool. One of the advantages of the invention is that, by working both the male and female elements in expansion, possible small differences in the diameter, thickness, ovalization, etc. between single tubular elements are produced in series are compensated. Moreover, the present invention makes it possible to make a joint between two elements with slightly different thickness or diameter from one another, in any case ensuring the seal against pressure and condensate. Small differences in thickness and/or diameter can be due to admissible tolerances and the joint compensates for such differences; this clearly represents a great advantage for modular (assemblable) pipe systems.

Preferably, the elements are made from metal sheet. This term is intended to mean metal sheet of steel and/or other alloys.

Preferred applications of the invention are represented by: chimney flues, gutters, ventilation channels, pipes for similar uses, usually made from metal sheet of steel or other alloys with small thickness. Other applications for example are represented by: tubings, smoke channels, flanged elements (also insulated) for generators, for metallic chimneys for taking, transporting and diffusing air that has been or is to be processed, etc.

Another object of the invention is a modular pipe system suitable for making chimney flues, smoke channels and the like, comprising pipe elements with a conical fitting system as outlined above.

The advantages will become more evident with the help of the following description and the figures, in which:
Fig. 1 is a section view of the male and female end parts of two pipe elements according to one of the embodiments of the invention,
Fig. 2 shows the elements of Fig. 1 fitted together.

### Detailed description of a preferred embodiment of the invention

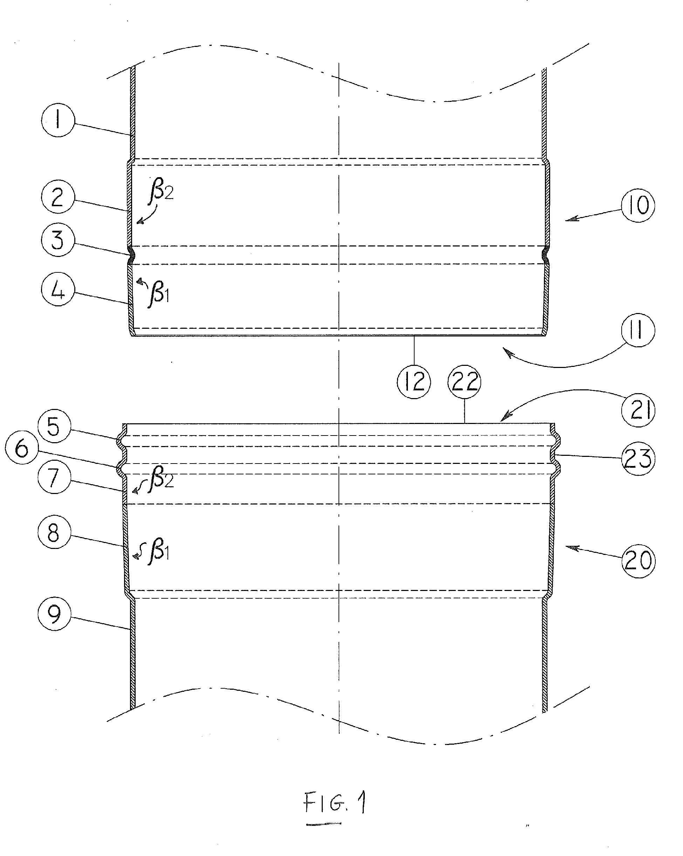

Fig. 1 shows two pipe elements 10, 20, made of metal sheet having small thickness. The elements 10, 20 have a substantially cylindrical part respectively 1, 9 with a certain nominal diameter, and fitting portions denoted with 11, 21. The pipe parts 1 and 9 are depicted simply as a rectilinear cylindrical tube, but they can equally comprise a bend, a tee, or other. The section can be circular or elliptical. Depending on the embodiments, the elements can be insulated if necessary.

The fitting portions have a conical profile that is tapered or enlarged with respect to the nominal diameter. The element 10 in greater detail ends with a conically tapered male end 11, which can be fitted in the female end 21 of the element 20, which is conically widened.

The male end 11, starting from the end section 12 of the element itself, comprises a first longitudinal portion 4 that is tapered with angle of conicity β₁, and a second longitudinal portion that is tapered with an angle of conicity β₂ < β₁. For example β₁ is about 1.5° whereas β₂ is about 0.25°. The first angle β₁ is called the sealing angle and the second angle β₂ is called the seizure angle.

The female end 21, starting from the respective end section 22 of the element 20, comprises a longitudinal entrance portion 7 that is enlarged with angle of conicity equal to said seizure angle β₂, and an inner longitudinal portion 8, also conically enlarged but with angle equal to said sealing angle β₁.

The male-female parts of the joint, in other words, have a double symmetrical conicity, since by moving from the end section 12, 22, respectively, one encounters the conicity β₁ - β₂ in the male 11, and symmetrically β₂ -β₁ in the female 21, being β₂ > β₁ as stated above.

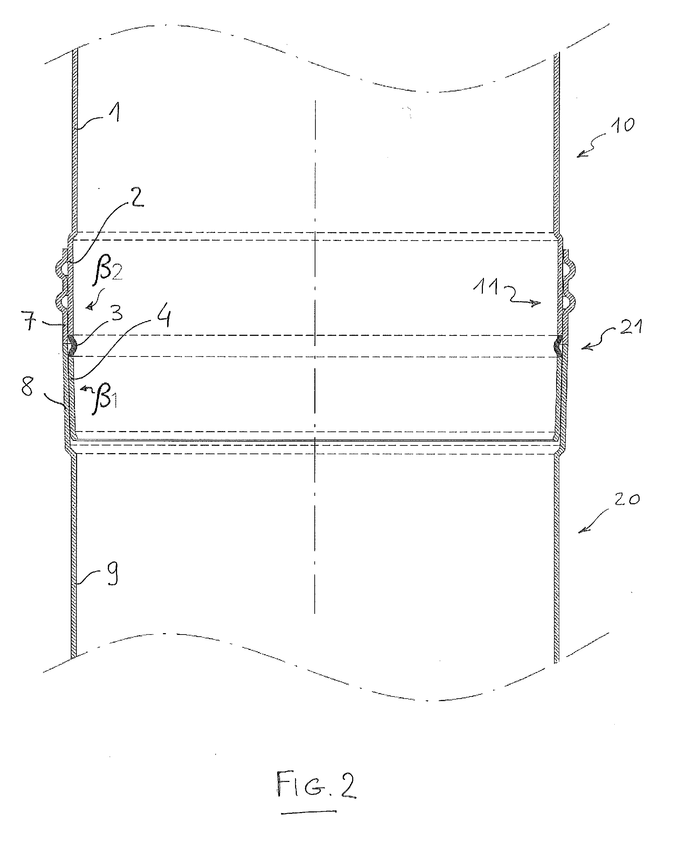

By fitting the elements into one another, as shown in Fig. 2, the portion 4 freely passes in the wider first section 7, but forms a conical (sealing) coupling when meeting the part 8. At the same time, a conical (seizure) coupling is made when the portion 2 meets the surface 7.

The figures also show some preferred features. The male end 11 has a groove 3 interposed between the portions 2 and 4 having different conicity. Said groove 3 prevents accidental overlap, during the fitting, of the parts having different conicity, for example the parts 2 and 8 with size error tolerance (+/-) given by the size of the groove. As can be noted in the figures, the groove 3 defines a minimum section of the pipe element, the diameter measured at the throat of said groove being less than the diameter of the adjoining conical parts 2 and 4.

The female end 21 has two ribbings 5 and 6, which form a double ribbing with a region 23 for housing a locking means. Said locking means, although not essential, can be provided, according to what is needed, to increase the seizing effect, and may consist of a flange, strap or other.

In some embodiments, the elements can be insulated. More specifically, the elements can be insulated individually or, in other embodiments, the insulation is obtained by coupling two diameters (double wall), in which, respectively, the inner diameter defines the piping and the outer one serves as a container of the insulation.

## Claims

1. Pipe element (10, 20) for making modular pipes, particularly for chimney flues and the like, comprising a substantially cylindrical or elliptical tube section, a conically tapered male end (11), and a conically enlarged female end (21), said male end and female end having corresponding outer and inner diameters to form a fitting system wherein the male end of said element (10) can be inserted into a female end of an adjoining second element (20), to make the fitting between the two elements, **characterised in that**:
- said male end (11), starting from the end section (12) of the element, comprises a first longitudinal portion (4) having a first angle of conicity (β₁), and a second longitudinal portion (2) having a second angle of conicity (β₂) smaller than said first angle,
- said female end (21), starting from the end section (22) of the element, comprises a longitudinal entrance portion (7) with angle of conicity equal to said second angle (β₂), and an inner longitudinal portion (8), with angle of conicity equal to said first angle (β₁).

2. Pipe element according to claim 1, said first angle of conicity (β₁) being comprised between 1° and 2° and preferably being about 1.5°.

3. Pipe element according to claim 1 or 2, said second angle of conicity (β₂) being less than 1° and preferably comprised between 0.2° and 0.5°, and even more preferably being about 0.25°.

4. Pipe element according to any one of the previous claims, wherein the male end (11) comprises a depression or throat (3) that substantially separates from one another said two portions (4, 2) of the male end having different angles of conicity.

5. Pipe element according to claim 4, wherein said depression or throat (3) has a diameter, at the throat section, that is smaller than the diameter of the adjoining conical portions (2, 4).

6. Pipe element according to any one of the previous claims, wherein the female end (21) has at least one ribbing.

7. Pipe element according to claim 6, said female end having two ribbings (5, 6), which form a double ribbing with an intermediate region (23) between the two ribbings, for receiving a locking means like a flange or a strap.

8. Pipe element according to any one of the previous claims, the system being without a gasket.

9. Pipe element according to claim 9, made from metal sheet of small thickness.

10. Pipe element according to claim 10, the thickness being less than 1.5 mm and preferably comprised between 0.4 and 1.5 mm.

11. Pipe element according to any one of the previous claims, also comprising insulation.

12. Set of elements for making modular pipes, particularly for making chimney flues and the like, comprising pipe elements (10, 20) according to any one of claims 1 to 11.

13. Conical fitting system comprising pipe elements (10, 20) according to any of the previous claims 1 to 11, wherein each pipe element comprises a substantially cylindrical or elliptical tube section, a conically tapered male end (11), and a conically enlarged female end (21), and wherein the male end of a generic first element (10) can be inserted into a female end of an adjoining second element (20), to make the fitting between the two elements, **characterised in that**:
- said male end (11), starting from the end section (12) of the element, comprises a first longitudinal portion (4) having a first angle of conicity (β₁), and a second longitudinal portion (2) having a second angle of conicity (β₂) smaller than said first angle,
- said female end (21), starting from the end section (22) of the element, comprises a longitudinal entrance portion (7) with angle of conicity equal to said second angle (β₂), and an inner longitudinal portion (8), with angle of conicity equal to said first angle (β₁).

## Patentansprüche

1. Rohrelement (10, 20) zur Herstellung von modularen Rohren, Insbesondere für Schornsteine und dergleichen, umfassend einen im wesentlichen zylindrischen oder elliptischen Rohrabschnitt, ein konisch verjüngtes männliches Ende (11) und ein konisch erweitertes weibliches Ende (21), wobei das männliche Ende und das weibliche Ende entsprechende äußere und innere Durchmesser aufweisen, um ein Passungssystem zu bilden, wobei das männliche Ende des genannten Elements (10) in das weibliche Ende eines anschließenden zweiten Elements (20) eingefügt werden kann, um die Passung zwischen den beiden Elementen herzustellen, **dadurch gekennzeichnet, dass**:
- das besagte männliche Ende (11), ausgehend von dem Endabschnitt (12) des Elements, einen ersten Längsabschnitt (4) mit einem ersten Konizitätswinkel (β₁) und einen zweiten Längsabschnitt (2) mit einem zweiten Konizitätswinkel (β₂), der kleiner als der erste Konizitätswinkel ist, umfasst;
- das besagte weibliche Ende (21), ausgehend von dem Endabschnitt (22) des Elements einen Längseintrittsabschnitt (7) mit einem Konizitätswinkel gleich dem genannten zweiten Konizitätswinkel (β₂) und einen Inneren Längsabschnitt (8), mit einem Konizitätswinkel gleich dem genannten ersten Konizitätswinkel (β₁), umfasst.

2. Rohrelement nach Anspruch 1, wobei der erste Konizitätswinkel (β₁) die Winkel zwischen 1° und 2° umfasst und vorzugsweise bei etwa 1,5° liegt.

3. Rohrelement nach Anspruch 1 oder 2, wobei der zweite Konlzltätswinkel (β₂) kleiner als 1° und vorzugsweise die Winkel zwischen 0,2° und 0,5° umfasst, und noch bevorzugter bei etwa 0,25° liegt.

4. Rohrelement nach einem der vorhergehenden Ansprüche, wobei das männliche Ende (11) eine Vertiefung oder einen Hals (3) aufweist, die im Wesentlichen die beiden Längsabschnitte (4, 2) des männlichen Endes mit unterschiedlichen Konizitätswinkeln voneinander trennt.

5. Rohrelement nach Anspruch 4, wobei die benannte Vertiefung oder der benannte Hals (3) an dem Halsabschnitt einen Durchmesser hat, der kleiner als der Durchmesser der angrenzenden konischen Bereiche (2, 4) ist.

6. Rohrelement nach einem der vorhergehenden Ansprüche, wobei das weibliche Ende (21) wenigstens eine Rippe aufweist.

7. Rohrelement nach Anspruch 6, wobei das genannte weibliche Ende zwei Rippen (5, 6) aufweist, die eine Doppelrippe mit einem Zwischenbereich (23) zwischen den beiden Rippen, zur Aufnahme eines Verriegelungsmittels, wie einem Flansch oder einem Band, bilden.

8. Rohrelement nach einem der vorhergehenden Ansprüche, wobei das System keine Dichtung aufweist.

9. Rohrelement nach Anspruch 9, aus einer Metallplatte geringer Dicke hergestellt.

10. Rohrelement nach Anspruch 10, wobei die Dicke kleiner als 1,5 mm und vorzugsweise zwischen 0,4 und 1,5 mm liegt.

11. Rohrelement nach einem der vorhergehenden Ansprüche, die ferner eine Isolierung aufweist.

12. Bausatz zur Herstellung von modularen Rohren, insbesondere für die Herstellung von Schornsteinen und dergleichen, mit Rohrelementen (10, 20) nach einem der Ansprüche 1 bis 11.

13. Konisches Passungssystem, umfassend Rohrelemente (10, 20) nach einem der vorhergehenden Ansprüche 1 bis 11, wobei jedes Rohrelement einen im wesentlichen zylindrischen oder elliptischen Rohrabschnitt, konisch verjüngtes männliches Ende (11) und ein konisch erweitertes weibliches Ende (21) umfasst, und wobei das männliche Ende eines generischen ersten Elements (10) in das weibliche Ende eines anschließenden zweiten Elements (20) eingefügt werden kann, um die Passung zwischen den beiden Elementen herzustellen, **dadurch gekennzeichnet, dass**
- das besagte männliche Ende (11), ausgehend von dem Endabschnitt (12) des Elementes, einen ersten Längsabschnitt (4) mit einem ersten Konizitätswinkel (β₁) und einen zweiten Längsabschnitt (2) mit einem zweiten Konizitätswinkel (β₂), der kleiner als der erste Konizitätswinkel ist, umfasst;
- das besagte weibliche Ende (21), ausgehend von dem Endabschnitt (22) des Elements einen Längseintrittsabschnitt (7) mit einem Konizitätswinkel gleich dem genannten zweiten Konizitätswinkel (β₂) und einen inneren Längsabschnitt (8), mit einem Konizitätswinkel gleich dem genannten ersten Konlzltätswinkel (β₁), umfasst.

## Revendications

1. Elément de tuyau (10, 20) pour fabriquer des tuyaux modulaires, en particulier pour les conduits de cheminées et autres produits similaires, comportant une section de tube essentiellement cylindrique ou elliptique, une extrémité mâle effilée en cône (11), et une extrémité femelle élargie (21), les dites extrémités mâle et femelle ayant des diamètres externe et interne correspondants afin de former un système d'ajustement dans lequel l'extrémité mâle du dit élément (10) peut être insérée dans une extrémité femelle d'un deuxième élément attenant (20), pour former le système d'ajustement entre les deux éléments, **caractérisé en ce que** :
- la dite extrémité mâle (11), à partir de la section terminale (12) de l'élément, est composée d'une premiére partie longitudinale (4) ayant un premier angle de conicité (β₁), et une deuxième partie longitudinale (2) ayant un deuxième angle de conicité (β₂) inférieur au dit premier angle,
- la dite extrémité femelle (21), à partir de la section terminale (22) du dit élément, comprend une partie d'entrée longitudinale (7) avec un angle de conicité égal au dit deuxième angle (β₂), et une partie longitudinale interne (8), avec un angle de conicité égal au dit premier angle (β₁).

2. Elément de tuyau selon la revendication 1, **caractérisé en ce que** le dit premier angle de conicité (β₁) est compris entre 1° et 2° et est de préférence d'environ 1,5°.

3. Elément de tuyau selon la revendication 1 ou 2, **caractérisé en ce que** le dit deuxième angle de conicité (β₂) est inférieur à 1° et de préférence compris entre 0,2° et 0,5°, et de préférence d'environ 0,25°.

4. Elément de tuyau selon l'une quelconque des revendications précédentes, **caractérisé en ce que** l'extrémité mâle (11) comprend une dépression ou une gorge (3) qui, essentiellement, sépare l'une de l'autre les dites deux parties (4, 2) de l'extrémité mâle ayant différents angles de conicité.

5. Elément de tuyau selon la revendication 4, **caractérisé en ce que** la dite dépression ou gorge (3) a un diamètre, au niveau de la section de la gorge, qui est inférieur au diamètre des parties coniques attenantes (2, 4).

6. Elément de tuyau selon l'une quelconque des revendications précédentes, **caractérisé en ce que** l'extrémité femelle (21) a au moins une nervure.

7. Elément de tuyau selon la revendication 6, **caractérisé en ce que** la dite extrémité femelle comporte deux nervures (5, 6) qui forment une double nervure avec une région intermédiaire (23) entre les deux nervures destinée à recevoir un moyen de fixation tel qu'une bride ou une sangle.

8. Elément de tuyau selon l'une quelconque des revendications précédentes, **caractérisé en ce que** le système est dépourvu de joint d'étanchéité.

9. Elément de tuyau selon la revendication 8, **caractérisé en ce qu'**il est fabriqué dans une feuille métallique de faible épaisseur.

10. Elément de tuyau selon la revendication 9, **caractérisé en ce que** l'épaisseur est inférieure à 1,5 mm et de préférence comprise entre 0,4 et 1,5 mm.

11. Elément de tuyau selon l'une quelconque des revendications précédentes, **caractérisé en ce qu'**il comprend également une isolation.

12. Jeu d'éléments pour fabriquer des tuyaux modulaires, en particulier pour fabriquer des conduits de cheminée et autres produits similaires, composé d'éléments de tuyau (10, 20) selon l'une quelconque des revendications 1 à 11.

13. Système d'ajustement conique d'élément de tuyau composé d'éléments de tuyau (10, 20) selon l'une quelconque des revendications 1 à 11 précédentes, dans lequel chaque élément de tuyau comporte une section de tube essentiellement cylindrique ou elliptique, une extrémité mâle effilée en cône (11) et une extrémité femelle élargie en cône (21), et où l'extrémité mâle d'un premier élément générique (10) peut être insérée dans une extrémité femelle d'un deuxième élément attenant (20), pour former le système d'ajustement entre les deux éléments, **caractérisé en ce que** :
- la dite extrémité mâle (11), à partir de la section terminale (12) de l'élément, comprend une première partie longitudinale (4) ayant un premier angle de conicité (β₁), et une deuxième partie longitudinale (2) ayant un deuxième angle de conicité (β₂) inférieur au dit premier angle,
- la dite extrémité femelle (21), à partir de la section terminale (22) de l'élément, comprend une partie longitudinale d'entrée (7) avec un angle de conicité égal au dit deuxième angle (β₂) et une partie longitudinale interne (8), avec un angle de conicité égal au dit premier angle (β₁).
